(19) Europäisches Patentamt
European Patent Office
Office européen des brevets

(11) Publication number : **0 661 502 A2**

# (12) EUROPEAN PATENT APPLICATION

(21) Application number : **94308263.6**

(51) Int. Cl.⁶ : **F24F 3/147**

(22) Date of filing : **09.11.94**

(30) Priority : **09.11.93 JP 303526/93**

(43) Date of publication of application : **05.07.95 Bulletin 95/27**

(84) Designated Contracting States : **DE FR GB IT SE**

(71) Applicant : **JAPAN GORE-TEX, INC.**
**42-5, 1-chome**
**Akazutsumi**
**Setagaya-ku Tokyo-To 156 (JP)**

(72) Inventor : **Hamasaki, Sadakatsu**
**134-199, Minamigozu**
**Okayama-Shi, Okayama-Ken 700 (JP)**
Inventor : **Sakamoto, Toru**
**927, Hara**
**Okayama-Shi, Okayama-Ken 700 (JP)**

(74) Representative : **McCallum, William Potter et al**
**Cruikshank & Fairweather**
**19 Royal Exchange Square**
**Glasgow G1 3AE Scotland (GB)**

## (54) A heat and moisture exchange device.

(57) The invention is for a device that provides heat exchange and moisture exchange for use in heating and air conditioning systems. The device consists of a housing containing an assembly having a non-porous water-vapor-permeable polymeric heat and moisture exchange film (2). The non-porous water-vapor-permeable heat and moisture exchange film is interposed between an air stream having a higher water content and an air stream having a lower water content. The film prevents passage of air through it but readily passes water vapor through it, thereby effecting heat exchange and moisture exchange between the air streams.

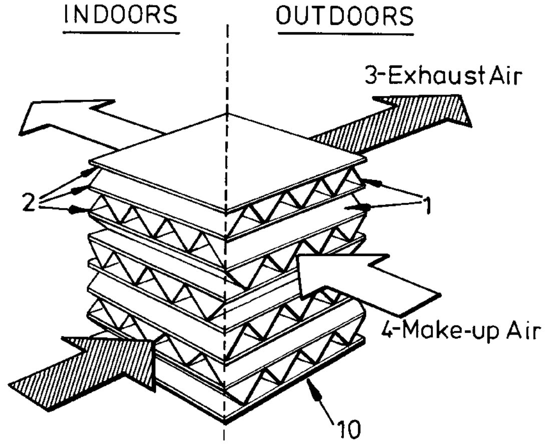


FIG. 1

EP 0 661 502 A2

This invention relates to a device for conditioning air, and more particularly, to heat exchange and moisture exchange components of such a device.

As central heating and cooling have become more commonplace in recent years, ventilation of the spaces heated or cooled is required to keep the spaces in a fresh, comfortable, and healthy state. In order to do this make-up or replacement air, generally from outdoor sources, is introduced into the spaces. As a consequence a portion of the air which has already been conditioned by heating or cooling is exhausted from the space resulting in a loss of heat energy and thus lowering the heating or cooling efficiency of the system conditioning the air in the spaces. Accordingly, heat exchangers are used in the exhaust and make-up air flow paths of these systems to recover some of the energy from the exhaust air and use it to introduce warmer make-up air during heating and cooler make-up air during cooling.

Recently, so-called "total heat exchangers" which perform moisture exchange in addition to heat exchanger have come into use in heating/cooling systems used to condition the air of indoor spaces. The function of these total heat exchangers is to introduce warmer air having a higher moisture content during heating, and to introduce cooler air having a lower moisture content during cooling.

Materials used for heat exchange in conventional systems include metal foils and sheets, plastic films, paper sheet, and the like. Although good heat exchange is possible with a heat-exchange film made of metal or plastic sheet, a drawback to these materials is that moisture exchange cannot be easily performed. Another drawback is that, depending on temperature and humidity conditions, condensation can form on the film surface which markedly reduces the heat exchange efficiency. Additionally, metals are relatively heavy and lead to an undesirable increase in the weight of the heat exchanger.

Heat exchange and moisture exchange are both possible with a heat-exchange film made of paper, but a drawback to this material is that water from condensation, rain, or moisture present in outdoor air are absorbed by the paper and can cause corrosion, deformation, mildew growth, etc., in the heat-exchange film. Such problems lead to a very short use life of the paper heat-exchange film.

In Japanese Laid-Open Patent Application No. 54-145048 is disclosed a heat-exchange film of a porous polymeric film. The porous polymeric film has excellent moisture permeability, however, because it is porous it suffers the drawback of having a high air permeability. One of the problems resulting from the high air permeability is that cigaret smoke, cooking fumes and other odors, or harmful gases such as carbon dioxide present in the exhaust air stream can pass through the porous film, enter the make-up air stream, and be recirculated back into the space from which they were exhausted. This is undesirable from the point of view of ventilation to improve the air quality in the conditioned air space. In order to prevent this contamination of the make-up air the pore volume of the porous film must be no more than about 15%, which is very difficult and expensive to do uniformly with the plastic film material. Furthermore, when the porous film is made in the range of 5 to 40 micrometers thick in order to improve heat exchange efficiency, it has little strength, tears easily, and must be handled with care, which leads to higher manufacturing costs.

It is a purpose of the invention to provide a heat-exchange film for use in a system for conditioning air which has excellent heat exchange efficiency, high moisture-exchange capability, and serves as a barrier to air flow between exhaust and make-up air streams.

It is a further purpose of the invention to provide a heat- and moisture-exchange film which resists formation of condensate, has good strength and handleability, has high durability in use, and can be used in environments in which excess water is present.

The present invention is for a device for use in a heating and/or cooling system used for conditioning air and ventilating indoor spaces. The device consists of a housing that contains an assembly for heat exchange and

According to the present invention, there is provided a device for conditioning air having a housing containing an assembly for heat and moisture exchange, said assembly comprising:

a composite film comprising a porous polymeric membrane having applied thereto a water-vapor-permeable polymeric material so as to form a non-porous barrier to bulk flow of air or other gas;

said composite film being adapted to be interposed between a gas stream having a higher water content and a gas stream having a lower water content;

whereby moisture from the gas stream having the higher water content permeates through said composite film to the side adjacent the gas stream having the lower water content where it is taken up by said gas stream having the lower water content,

thereby effecting heat exchange and moisture exchange between the gas streams adjacent each side of said composite film.

Preferably the porous polymeric membrane is a porous polytetrafluoroethylene membrane.

Preferably also, the water-vapor-permeable polymeric material is a hydrophilic polyurethane polymer.

An embodiment of the invention will now be described, by way of example, with reference to the accompanying drawing, in which:-

Figure 1 is an oblique perspective view of an assembly of the invention.

In Figure 1 is shown a representative embodiment of the invention. The drawing is presented for illustrative purposes only and is intended to be not limiting.

The heat exchange and moisture exchange device is an assembly 10 that is contained within a conventional housing typical of heat exchangers used in heating and air conditioning systems. The housing can be made according to designs and of materials well known in the art. The housing and related duct work, fans, andother equipment of a heating or air conditioning system are omitted from the drawing in order to better illustrate the device of the invention.

The assembly 10 shown in Figure 1 consists of a multiplicity of composite films 2 (hereinafter also referred to as heat-exchange films) interposed between streams of exhaust air 3 and make-up air 4 and separated by separators 1. Use of separators 1 between the heat exchange films 2 is optional depending on the method of mounting the films within the housing. As with the housing, the separators 2 can be formed in conventional configurations and of common materials, such as metals or plastics, in a manner consistent with the air flow and heat exchange requirements desired of the assembly, by means well known in the art.

The composite heat exchange film 2 comprises a porous polymeric membrane coated and/or impregnated with a water-vapor-permeable polymeric material. The water-vapor-permeable polymeric material is coated on or impregnated into the porous membrane in a manner such that it forms a non-porous barrier to bulk flow of air or other gases through the heat exchange film.

The porous polymeric membrane should have a nominal pore size in the range 0.01 to 10 micrometers, preferably in the range 0.1 to 1 micrometer; a pore volume in the range 50 to 98 percent, preferably in the range 60 to 95 percent; and a thickness in the range 5 to 100 micrometers, preferably in the range 15 to 40 micrometers. If the nominal pore size of the membrane is greater than 10 micrometers, it is difficult to obtain a uniformly thin coating or impregnation thickness of the water-vapor-permeable polymeric material. If the pore volume is less than 50%, the permeation rate of water through the membrane is reduced and heat exchange efficiency will suffer; and if the pore volume exceeds 95%, the membrane is quite weak and difficult to handle.

The porous membrane of the composite film can be made of a broad variety of materials so long as the material fits the description above and has a use-temperature range that can accommodate manufacturing methods and temperatures encountered in home, office, and industrial climates. Also, the material of the porous membrane should have good chemical resistance so that it can withstand attack from chemicals encountered in such environments. Suitable materials include, but are not limited to polyethylene, polypropylene, polycarbonates, and fluoropolymers such as polytetrafluoroethylene, tetrafluoroethylene/(perfluoroalkyl) vinyl ether copolymer, tetrafluoroethylene/hexafluoropropylene copolymer, polyvinyl fluoride, polyvinylidene fluoride, and the like. Fluoropolymers are preferred because of their broad use-temperature range and high chemical resistance; most preferred are porous materials of polytetrafluoromethylene.

Porous polytetrafluoroethylene membranes suitable for use in the invention can be made by processes known in the art, for example, by stretching or drawing processes, by papermaking processes, by processes in which filler materials are incorporated with the PTFE resin and that are subsequently removed to leave a porous structure, or by powder sintering processes. Preferably the porous polytetrafluoroethylene membrane is porous expanded polytetrafluoroethylene membrane having a structure of interconnected nodes and fibrils, as described in U.S. Patent Nos. 3,953,566 and 4,187,390 which fully describe the preferred material and processes for making them.

The water-vapor-permeable polymeric material which is coated on or impregnated into the porous membrane is applied so as to form a non-porous barrier to bulk flow of air or other gases. The water-vapor-permeable polymeric material should be applied to the porous membrane so that it is in the range 1 to 20 micrometers thick, preferably in the range 5 to 12 micrometers thick. The thickness of the water-vapor-permeable polymeric material should be in the range 5 to 60 percent of the thickness of the composite heat exchange membrane, preferably in the range 20 to 40 percent of the membrane thickness.

The water-vapor-permeable polymeric material should form a non-porous barrier to bulk flow of air or other gases that has an air-flow permeability of at least 5000 Gurley Number. The Gurley Number is the time (in seconds) for 100 cubic centimeters of air to flow through 1 square inch (6.45 $cm^2$) at a pressure of 4.88 inches (12.4 cm) of water. Thus, the higher the Gurley Number the lower the flow. Preferably, the water-vapor-permeable polymeric barrier material will permit no air flow through it at all.

On the other hand, the water-vapor-permeable polymeric barrier material should have a high water vapor transmission rate (WVTR). The water-vapor-permeable barrier material should have a WVTR of at least 30,000 $g/m^2/24$ hours, preferably more than 50,000 $g/m^2/24$ hours as measured by the procedures given in Japanese Industrial Standard JIS L 1099B-1.

Hydrophilic polymers that have hydroxyl groups, carboxyl groups, sulfonic acid groups, amino groups, and

the like, that are water swellable but water insoluble, can be used as the water-vapor-permeable polymeric material of the invention. Examples of such hydrophilic polymers include, but are not limited to, partially crosslinked polyvinyl alcohols, cellulose acetate, cellulose nitrate, polyamino acids, polyurethanes, hydrophilic fluorine-containing polymers, and the like. Hydrophilic silicone-based polymers can also be used. Hydrophilic polyurethane polymers and fluorine-containing moisture permeable polymers are preferred for their heat resistance, chemical resistance, and workability.

Polyurethane polymers that demonstrate good flux of water vapor through them tend to be hydrophilic block copolymers wherein the hydrophilic soft segment is found in excess of 50% by weight of the copolymer and is of the polyoxyethylene chemical family. Such polymers are usually obtained through a reaction in which the starting materials are a polyisocyanate compound and a polyol having high hydrophilicity, such as polyoxyethylene glycol. A polyoxyalkylene polyol can also be used if increased moisture permeability or increased curing rate is desired. Such materials can be cured by reaction with the moisture present in air, or may be combined with curing agents, for example diols and diamines, in two-part systems for more rapid curing. The materials can also include catalysts and other reactive additives to permit curing by ultraviolet radiation, electron beam radiation, and the like. Many hydrophilic polyurethane polymers are commercially available, and can be used as the water-vapor-permeable polymeric material of the invention.

Water-vapor-permeable copolymers having fluorine-containing components can also be used favorably. Examples of suitable fluorine-containing copolymers are listed below:

$CF_2CXX'$ (Formula 1)

$CF_2CX$ (Formula 2)

$YA$

In Formulas 1 and 2 above, X and X' are fluorines, hydrogens, or trifluoromethyl groups; A is $SO_3M$ or COOM (where M is hydrogen, and alkali metal, or a group that can be converted into one of these groups by hydrolysis); and Y is $(CF_2)_x$, or $O(CF_2)_x$, or a group expressed by one of the following formulas:

$(OCF^2CF)_x$

$Z$

$(OCF_2CF)_xO(CF)_y$

$Z \quad Z'$

where Z and Z' are fluorines or perfluoroalkyl groups with a carbon number of 1 to 10, and x and y are integers of 1 to 10.

Another suitable fluorine-containing material for the water-vapor-permeable polymeric material of the invention is a hydrophilic fluorine-containing copolymer comprising units of a fluorine-containing ethylenically unsaturated monomer and units of a non-fluorinated vinyl monomer containing a hydrophilic functional group; where the fluorine content of the hydrophilic fluorine-containing polymer is between 2 and 60 percent, preferably between 10 and 60 percent, by weight of the copolymer, and the ratio of the formula weight of the recurring units of the copolymer to the number of functional groups is between 45 and 700. Such a hydrophilic fluorine-containing copolymer is fully disclosed in U.S. Patent Application No. 5,130,024 (to Fujimoto, et al.)

The water-vapor permeable polymeric material can be applied to the the porous polymeric membrane to form the heat exchange film by conventional means such as by doctor blade coating, or by roll-coating methods involving gravure rolls, reverse rolls, kiss-coating rolls, and the like. The water-vapor-permeable polymeric material can also be prepared as free-standing film and laminated to the porous membrane by conventional means such as by use of adhesives, or in the case of heat-bondable materials, by application of heat and pressure.

When the water-vapor-permeable polymeric material is a polyurethane copolymer the method used can be to mix polyol and polyisocyanate components, apply the mixture to coat or impregnate the porous membrane, and heat the composite film to cure the copolymer. Solvent dilution of the mixture can be used to control

the viscosity of the mixture if desired. When the water-vapor-permeable polymeric material is a fluorine-containing copolymer a suitable method can be to dissolve the copolymer in an alcohol, ketone, ester, amide, hydrocarbon, or other organic solvent, coat or impregnate the porous membrane with the solution, and remove the solvent by conventional drying methods. Likewise, when a silicone-based copolymer is used, it can be dissolved in toluene or other suitable organic solvent, coated on or impregnated into the porous membrane, and dried by conventional means.

When the water-vapor-permeable polymeric material is impregnated into the porous membrane to form the non-porous barrier it is generally necessary to dilute or dissolve the material with a solvent to obtain a suitable liquid viscosity for impregnation. The viscosity of the solution should be adjusted to be in the range 0.1 to 5 poise, preferably in the range 0.5 to 3 poise. The polymer content of the solution is usually in the range 5 to 70 weight percent, and preferably in the range 10 to 40 wt.%. Impregnation should be done so that all the pores extending from one surface of the porous membrane to a depth of 5 to 50 percent, preferably 5 to 30 percent, of the thickness of the porous polymeric membrane are essentially completely filled with the cured water-vapor-permeable polymeric material, thus forming a non-porous barrier within the porous membrane that prevents air flow through the membrane. Accordingly, 50 to 95 percent, preferably 70 to 95 percent, of the pores in the porous membrane are free of the water-vapor-permeable polymeric material.

As noted earlier, the water-vapor-permeable polymeric material can be applied to the porous polymeric membrane to form a coating on the surface of the membrane. The heat exchange film can also be made with the water-vapor-permeable polymeric material forming a non-porous coating on one surface and, additionally, be partially impregnated into the porous membrane below the surface.

In order to improve strength and handleability the heat exchange film can, optionally, be laminated to a woven, knitted, or non-woven cloth for reinforcement. The reinforcing cloth should have an open, highly porous structure and should be as thin as possible while still prossessing the required strength. Lightweight woven, knitted, or non-woven cloth of synthetic polymers, weighing in the range 5 to 100 g/m$^2$, preferably in the range 15 to 40 g/m$^2$, are suitable for the purpose; and are generally in the range 150 to 350 micrometers thick.

The reinforcing cloth and heat exchange film can be laminated by conventional methods and equipment well known in the art. If an adhesive is used for lamination it should be applied to a surface to be laminated in a manner that minimizes blocking the open, porous structure of the reinforcing cloth. For example, the adhesive can be applied as discrete dots by gravure printing methods, or applied by kiss-coating the adhesive onto the high spots of the cloth, or other like methods. The adhesive should occupy 35 percent or less, preferably 25 percent or less, of the surface area of the material to which it is applied. If the reinforcing cloth is made of a thermoplastic polymer having a suitable melt temperature, conventional heat-bonding methods, such as application of heat and pressure by platen presses or heated rolls may be used.

Another option for the heat exchange film of the present invention is to give the porous polymeric membrane and/or the reinforcing cloth a treatment to make the interior pores surfaces hydrophilic. Such a treatment is useful when the heat exchange film is to be used in an environment where excess water is present or condensation is likely. By making the interior pore surfaces hydrophilic liquid water will wet the surfaces, evaporate more readily or run down the film, and will not collect in the form of droplets that reduce heat exchange efficiency within the porous structures. A suitable hydrophilic treatment that substantially preserves the porous nature of the materials treated is disclosed in U.S. Patent No. 5,130,024 described hereinabove. Other suitable hydrophilizing treatments are also known in the art, and can be used.

Example 1

A series of samples of the composite heat exchange film of the invention were prepared as follows:

For each sample, a porous expanded polytetrafluoroethylene (PTFE) membrane was coated with a non-porous water-vapor-permeable coating of a hydrophilic polyurethane copolymer by reverse roll-coating. The porous expanded polytetrafluoroethylene membrane had a pore volume of 85% and a nominal pore size of 0.2 micrometers. After curing, a non-woven polyester cloth ("MARIX", made by Unitika Co.) was laminated to the side coated with the polyurethane copolymer. A solvent-free urethane-based adhesive was used as the bonding agent, and was applied to the surface in discrete dots by a heated gravure roll. The bonded surface are was approximately 25%.

Four thicknesses of porous expanded polytetrafluoroethylene membrane were used in the series; 15, 20, 25, and 30 micrometers. Three weights of "MARIX" polyester non-woven cloth were used; 30 g/m$^2$, 40 g/m$^2$, and 50 g/m$^2$. The 30 g/m$^2$ cloth (Article 70300 WSO) had the following properties: thickness - 180 micrometers; longitudinal (MD) tensile strength - 12 kgf/5 cm-width; transverse (TD) tensile strength - 4 kgf/5 cm-width; and longitudinal tear strength - 0.4 kgf. The hydrophilic polyurethane copolymer was applied in three thicknesses; 5, 10 and 15 micrometers. The samples are tabulated in Table 1 below.

Test specimens of the samples were immersed in water (pH-7) for 30 days with no indication of degradation or loss of strength. All of the samples had a Gurley Number of at least 10,000, and a water vapor transmission rate (WVTR) of about 65,000 $g/m^2/24$ hours. All of the samples had a heat exchange efficiency of about 70 percent.

By measurement of wet- and dry-bulb temperature, absolute and relative humidity, and dew point of the air streams before and after passage through a heat exchanger, the enthalpies of the make-up air entering the heat exchanger (uw1) and exiting the heat exchanger (uw2), and of the exhaust air entering the heat exchanger (uc1) and exiting the heat exchanger (uc2) are determined. Heat exchange efficiency of the make-up air stream (U1) and exhaust air stream (U2) were calculated as follows:

$$U1 = [(uw1 - uw2)/(uw1 - uc1)] \times 100$$

$$U2 = [(uc2 - uc1)/(uw1 - uc1)] \times 100$$

| TABLE 1 | | | |
|---|---|---|---|
| SAMPLE | MEMBRANE THICKNESS (micrometers) | SUPPORT FABRIC Wt. ($g/m^2$) | HYDROPHILIC POLYMER THICKNESS (micrometers) |
| A1 | 15 | 30 | 5 |
| B1 | 20 | 30 | 5 |
| C1 | 25 | 30 | 5 |
| D1 | 30 | 30 | 5 |
| E1 | 15 | 40 | 5 |
| F1 | 20 | 40 | 5 |
| G1 | 25 | 40 | 5 |
| H1 | 30 | 40 | 5 |
| I1 | 15 | 50 | 5 |
| J1 | 20 | 50 | 5 |
| K1 | 25 | 50 | 5 |
| L1 | 30 | 50 | 5 |
| A2 | 15 | 30 | 10 |
| B2 | 20 | 30 | 10 |
| C1 | 25 | 30 | 10 |
| D2 | 30 | 30 | 10 |
| E2 | 15 | 40 | 10 |
| F2 | 20 | 40 | 10 |
| G2 | 25 | 40 | 10 |
| H2 | 30 | 40 | 10 |
| I2 | 15 | 50 | 10 |
| J2 | 20 | 50 | 10 |
| K2 | 25 | 50 | 10 |
| L2 | 30 | 50 | 10 |
| A3 | 15 | 30 | 15 |
| B3 | 20 | 30 | 15 |
| C3 | 25 | 30 | 15 |
| D3 | 30 | 30 | 15 |
| E3 | 15 | 40 | 15 |
| F3 | 20 | 40 | 15 |
| G3 | 25 | 40 | 15 |
| H3 | 30 | 40 | 15 |

| | | | |
|---|---|---|---|
| I3 | 15 | 50 | 15 |
| J3 | 20 | 50 | 15 |
| K3 | 25 | 50 | 15 |
| L3 | 30 | 50 | 15 |

Example 2

A series of samples were prepared as described in Example 1, except that the non-woven polyester reinforcing cloth was laminated to the porous expanded polytetrafluoroethylene membrane on the side not coated with the hydrophilic polyurethane copolymer.

The samples were tested as described in Example 1. The heat exchange efficiency was very slightly lower. Otherwise, the results were, within experimental error of about ±2%, the same as obtained from the samples of Example 1.

Examples 3 and 4

A series of samples were prepared as described in Examples 1 and 2, except that a reinforcing cloth of knitted fabric (No. 2020, made by Itochu Co.) was substituted in place of the non-woven polyester cloth. The knitted fabric had a weight of 26 g/$m^2$ and was 190 micrometers thick.

The samples were tested as described in Example 1. The results were, within experimental error of about ±2%, the same as obtained from the samples of Example 1.

Example 5

A porous expanded polytetrafluoroethylene membrane (pore volume - 82%; nominal pore size - 0.2 micrometers; thickness - 20 micrometers) was coated with a non-porous water-vapor-permeable coating of a hydrophilic silicone-based polymer (PRX-305T, available from Dow Corning Toray Silicone Co.) by reverse roll-coating. The silicone-based polymer was applied, without dilution, to form a coating 10 micrometers thick.

After curing, a non-woven cloth of polyester/polypropylene 50/50 blend ("ELEVES", No. S0303, made by Unitika Co.) was laminated to the side of the porous PTFE membrane not coated with the silicone-based polymer. A solvent-free urethane-based adhesive was used as the bonding agent, and was applied to the surface in discrete dots by a heated gravure roll. The bonded surface area was approximately 25%.

The non-woven polyester and polypropylene cloth had the following properties: weight - 30 g/$m^2$; thickness - 230 micrometers; longitudinal (MD) tensile strength - 14 kgf/5 cm-width; transverse (TD) tensile strength - 5 kgf/5 cm-width; and longitudinal tear strength - 0.6 kgf.

The example was tested as described in Example 1. Test specimens of the example were immersed in water (pH-7) for 30 days with no indication of degradation or loss of strength. The material of the example had a Gurley Number of at least 10,000. Heat exchange efficiency was 45%, and the WVTR was also lower than the examples above, although both values were high enough for acceptable use as a total heat exchange film.

Example 6

A heat exchange film was prepared as described in Example 5, except that Nafion® #1000 (a fluorine-containing moisture permeable polymer manufactured by DuPont Co.) was substituted in place of the hydrophilic silcone-based polymer. For coating, a solution of Nafion® #1000 dissolved in a mixture of water and isopropyl alcohol was used.

The example was tested as described in Example 1. The WVTR of the example was about 100,000 g/$m^2$/24 hours. Otherwise, the test results were, within experimental error of about ±2%, the same as reported for the samples of Example 1.

Example 7

A porous expanded polytetrafluoroethylene membrane (pore volume - 85%; nominal pore size - 0.2 micrometers; thickness - 20 micrometers) was coated with a non-porous water-vapor-permeable coating 10 micrometers thick of a hydrophilic polyurethane copolymer as described in Example 1. After curing, a non-woven cloth of polyester (also described in Example 1) having a weight of 30 g/$m^2$ was laminated to the side of the porous PTFE membrane not coated with the hydrophilic polyurethane copolymer. A solvent-free urethane-based adhesive was used as the bonding agent, and was applied to the surface in discrete dots by a heated gravure roll. The bonded surface area was approximately 25%.

The composite film thus prepared was then given a treatment to make the interior pore surfaces of the porous expanded polytetrafluoroethylene membrane and the interior pore surfaces of the non-woven polyester cloth hydrophilic. The treatment consisted of placing the composite film, with the cloth surface face down so that the porous portions of the composite film were immersed, in a methanol solution containing 1 wt.% of a saponified tetrafluoroethylene/vinyl alcohol copolymer (degree of saponification - 100%; fluorine content - 27 wt.%; hydroxyl group content - 14,5 mmol/g). The treated heat exchange film was then dried for 60 seconds in forced air heated to 50°C.

The example was tested as described in Example 1. The WVTR of the example was about 75,000 g/$m^2$/24 hours. Otherwise, the test results were, within experimental error of about ±2%, the same as reported for the samples of Example 1.

Example 8

A porous polyethylene film (pore volume - 85%; nominal pore size -0.2 micrometers; thickness - 15 micrometers) was immersed and impregnated with a methanol solution containing 8 wt. % of a saponified tetrafluoroethylene/vinyl alcohol copolymer (degree of saponification - 100%; fluorine content - 27 wt. %; hydroxyl group content - 14.5 mmol/g), after which it was dried for 5 minutes at 50°C, to remove the methanol.

After drying, the polyethylene film filled with the tetrafluoroethylene/vinyl alcohol copolymer was laminated to a non-woven cloth of polyester ("MARIX" No. 70400 WSO, available from Unitika Co.) having a weight of 40 g/$m^2$ and thickness of 210 micrometers. A solvent-free urethane-based adhesive was used as the bonding agent, and was applied to the surface in discrete dots by a heated gravure roll. The bonded surface area was approximately 25%.

The example was tested as described in Example 1. The WVTR of the example was about 60,000 g/$m^2$/24 hours and the Gurley Number was about 5,000. Otherwise, the test results were, within experimental error of about ± 2%, the same as reported for the samples of Example 1.

Example 9

A porous polytetrafluoroethylene film (pore volume - 85%; nominal pore size -0.2 micrometers; thickness - 20 micrometers) was immersed and impregnated with an ethanol solution containing 5 wt.% of Nafion® #1000 (a fluorine-containing moisture permeable polymer manufactured by DuPont Co.), after which it was dried for 5 minutes at 100°C, to remove the ethanol. The impregnation was repeated to produce an expanded polytetrafluoroethylene membrane filled with a non-porous water-vapor-permeable barrier of Nafion® #1000.

After drying, the composite film was laminated to a non-woven cloth of polyester/polypropylene 50/50 blend ("ELEVES", No. S0503, made by Unitika Co.). A solvent-free urethane-based adhesive was used as the bonding agent, and was applied to the surface in discrete dots by a heated gravure roll. The bonded surface area was approximately 25%.

The non-woven polyester/polypropylene cloth had the following properties: weight - 50 g/$m^2$; thickness - 330 micrometers; longitudinal (MD) tensile strength - 24 kgf/5 cm-width; transverse (TD) tensile strength - 10 kgf/5 cm-width; and longitudinal tear strength - 1.0 kgf.

The example was tested as described in Example 1. The WVTR of the example was about 85,000 g/$m^2$/24 hours. Otherwise, the test results were, within experimental error of about ±2%, the same as reported for the samples of Example 1.

## Claims

1. A device for conditioning air having a housing containing an assembly for heat and moisture exchange, said assembly comprising:

   a composite film comprising a porous polymeric membrane having applied thereto a water-vapor-permeable polymeric material so as to form a non-porous barrier to bulk flow of air or other gas;

   said composite film being adapted to be interposed between a gas stream having a higher water content and a gas stream having a lower water content;

whereby moisture from the gas stream having the higher water content permeates through said composite film to the side adjacent the gas stream having the lower water content where it is taken up by said gas stream having the lower water content,

thereby effecting heat exchange and moisture exchange between the gas streams adjacent each side of said composite film.

**2.** A device as claimed in claim 1, in which the porous polymeric membrane is coated with the water-vapor-permeable polymeric material.

**3.** A device as claimed in claim 1, in which the porous polymeric membrane is impregnated with the water-vapor-permeable polymeric material.

**4.** A device as claimed in any of claims 1 to 3, wherein

said porous polymeric membrane has a pore volume of at least 50% and not greater than 95%; and

said non-porous water-vapor-permeable polymeric material has a water-vapor-transmission rate of at least 30,000 $gm^2/24$ hours.

**5.** A device as claimed in any preceding claim, wherein

said porous polymeric membrane is a porous polytetrafluoroethylene membrane; and

said non-porous water-vapor-permeable material is a hydrophilic polyurethane polymer.

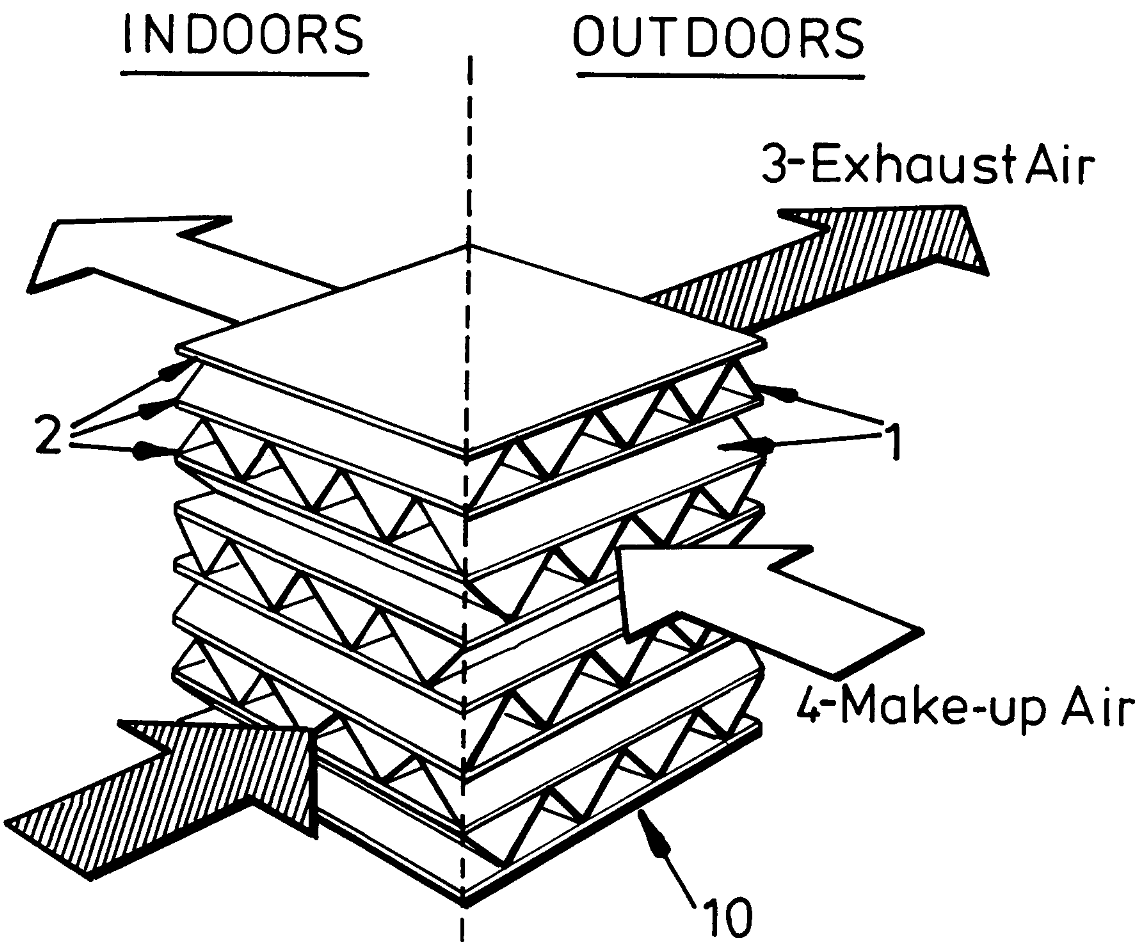


FIG. 1